# EUROPEAN PATENT APPLICATION

(11) **EP 0 606 487 A1**
(43) Date of publication of application: **20.07.1994**
(21) Application number: 93913523.2
(22) Date of filing: 15.06.1993
(51) Int. Cl.: A01G 7/00

(54) **PROCESS FOR PRODUCING SUBSTANCE INOCULATED WITH VA MYCORRHIZAL FUNGUS**

(30) Priority: 22.07.1992 JP 215738/92
(71) Applicant: IDEMITSU KOSAN COMPANY LIMITED, Tokyo 100 (JP)
(72) Inventor: SAKAI, Yoshikazu, Idemitsu Kosan Company Limited, Sodegaura-shi, Chiba 299-02 (JP); MIYAMOTO, Jin, Idemitsu Kosan Company Limited, Sodegaura-shi, Chiba 299-02 (JP)
(74) Representative: Türk, Gille, Hrabal, Leifert
(86) International application number: JP9300801
(87) International publication number: WO9401998

(57) **Abstract**

A process for producing a substance inoculated with a VA mycorrhizal fungus, which comprises cultivating a plant infected with a VA mycorrhizal fungus belonging to the genus *Gigaspora* by using a base material comprising calcined Akadama soil or a mixture thereof with calcined attapulgite to thereby proliferate the VA mycorrhizal fungus. This process serves to prevent contamination with indigenous VA mycorrhizal fungi, pathogenic bacteria and the like and efficiently proliferate a VA mycorrhizal fungus belonging to the genus *Gigaspora* used as a pure seed fungus. The invention serves to prepare a substance inoculated with a VA mycorrhizal fungus, which is easy to handle and has a high spore density, at a low lost. Furthermore, the invention makes it possible to commercialize, as such, the base material for proliferating a VA mycorrhizal fungus, so that a troublesome step of spore separation can be dispensed with and the operation can be simplified.

## Description

### Field of Technology

The present invention relates to a method of preparing a VA mycorrhizae inoculant which is useful in the field of agriculture and horticulture and, more precisely, to a method of preparing a Gigaspora VA mycorrhizae inoculant having a high VA mycorrhizal spore density.

### Background Technology

VA mycorrhizae (Vesicular Arbuscular mycorrhizae) are known to live together with plant roots by symbiosis to promote the growth of plants as infected therewith and to improve the disease resistance of the infected plants, and the usefulness of them have been known from the past (M. Ogawa, VA Mycorrhizae and Their Activities, Forest Site, Vol. 30(2), pages 57 to 65, 1988; N. Kobayashi, Utilization of VA Mycorrhizae to Soil Diseases, Prevention of Plant Diseases, Vol, 42, pages 259 to 266, 1988).

However, a commercial VA mycorrhizae inoculant to be obtained by artificial propagation of VA mycorrhizae, especially those of the genus Gigaspora, has not been produced up to the present.

The reason is considered especially because mass-production of VA mycorrhizae, especially those of the genus Gigaspora, is extremely difficult and the operation for cultivation of them is complicated and is expensive.

Under the situation, especially for commercial use of VA mycorrhizae of belonging to the genus Gigaspora, an inexpensive method for mass-production of the microbes by simple cultivation of them is desired.

Some methods have heretofore been proposed for propagating VA mycorrhizae.

For instance, there is known an in-soil cultivating method where VA mycorrhizae are collected from the soil of a farm field with no crops being cultivated therein or where VA mycorrhizae are inoculated in the soil of a farm field with no crops being cultivated therein and suitable host plants are cultivated in the soil so as to propagate the inoculated VA mycorrhizae therein.

However, the in-soil cultivating method needs an operation of separating the spores of VA mycorrhizae as cultivated in the soil. In addition, if a natural soil is used for the cultivation, the cultivated VA mycorrhizae would often be contaminated by the indigenous VA mycorrhizae and other pathogenic microbes. The problem could be solved by sterilizing the soil with chemicals or steam, but it needs additional labor for the sterilization. Further, the sterilization involves an additional problem that the growth of the VA mycorrhizae would be inhibited by the residual chemicals.

For separating a large amount of the spores of the cultivated VA mycorrhizae from the soil in accordance with the in-soil cultivating method, there have heretofore been proposed a method where the soil is fractionated by sieving and the spores of them are separated due to the difference in the specific gravity (T. Suzuki, Problems on VA mycorrhizae 5, Agriculture and Horticulture, Vol. 62, No. 3. pp. 28 to 33, 1987) and a centrifugal method (JP-A 63-309178 - the term "JP-A" as used herein means an "unexamined published Japanese patent application"). However, the methods needs extremely complicated operations and production of VA mycorrhizae by them in a commercial scale was difficult.

As another method of propagating VA mycorrhizae, there has also been proposed a nutrient film technique cultivation method of using a porous material where the roots of plants may be distributed therein (JP-A 55-118390).
However, use of such a porous material as a support for inoculation of VA mycorrhizae involves a problem that the infecting capacity of the inoculated VA mycorrhizae would lower due to drying of the roots of the plants.

A still another method of in-vitro cultivation of VA mycorrhizae by the use of hairly roots has been proposed (JP-B 62-49047 - the term "JP-B" as used herein means an "examined Japanese patent publication", and JP-A 3-83522).

Since the method is an aseptic one, this is free from contamination by pathogenic microbes but this has a drawback that the operation for the method is extremely complicated.

As still other known methods, there are a method where a porous substance such as pearlite, vermiculite, clay or the like is used as a medium for propagation of plants and VA mycorrhizae and VA mycorrhizae are propagated on the porous substance (N.C. Schenck, Methods and Principles of Mycorrhizal Research, The American Phytopathological Society, page 61, 1982), and a method where plants of wheat, pepper, corn, sorghum, Welsh onion, alfalfa peanut and the like are used and cultivated on a carrier of vermiculite, peat, pearlite, pumice or the like so as to propagate VA mycorrhizae (Powell D. Joseph Bagyaraj, VA Mycorrhiza Conway L1, CRC Press, page 190, 1984).

However, no example has heretofore been disclosed of propagating high-density VA mycorrhizae of belonging to the genus Gigaspora by these methods.

Some methods have also been proposed for inducing sporulation of VA mycorrhizae. For instance, there are known a method of regulating the length of the day time for forcedly blooming plants to thereby induce the sporulation of VA mycorrhizae (JP-A 2-227068) and a method of forcedly blighting plants without watering them so as to induce the sporulation of VA mycorrhizae. In accordance with these methods, however, the used plants must be discarded after every sporulation of VA mycorrhizae so that continuous sporulation of them was impossible.

The method of preparing a VA mycorrhizae inoculant may be grouped into the following two types, both of which, however, could not yield a VA mycorrhizae inoculant applicable to practical use.

The first includes a method of separating and recovering spores of VA mycorrhizae as propagated in a soil, blending the spores with a carrier such as vermiculite, attapulgite or diatomaceous earth along with an adhesive substance such as carboxymethyl cellulose, and granulating the resulting blend (JP-A 1-165369); and the same method as above, except that a mixture comprising the above-mentioned carrier and charcoal is used (JP-A 3-103124).

In accordance with the methods, however, spores of VA mycorrhizae are damaged during the step of separating them or during the step of granulating the spores-containing inoculant. In addition, in the step of granulation, the inoculant is forcedly dried so that many spores would die with considerable frequency. As a result, it was difficult to obtain a VA mycorrhizae inoculant of high quality by the methods.

The second includes a method of using a soil (JP-A 3-58715, 3-76572); a method of using a porous structure such as a foamed clay or pumice (JP-A 60-237987, 55-118390); and a method of using a porous ampho-ion exchanger (JP-A 63-87973). In these methods, roots of plants and VA mycorrhizae are made to live together by symbiosis so as to propagate the VA mycorrhizae, and the VA mycorrhizae as adhered to the carrier are directly used as they are as a VA mycorrhizae inoculant.

In these methods, however, where a natural soil is used, for example, in the manner as described in JP-A 3-58715, these would have a problem of contamination with pathogenic microbes.

In accordance with the method of JP-A 3-76572 where a fine granular soil is used as a carrier for VA mycorrhizae and the soil carrier is charged in the interface to a coarse granular soil in the depthwise direction for cultivation of plants, the propagated VA mycorrhizae are recovered in the fine granular soil having a grain size of from 0.1 to 1 mm. Accordingly, the fine granular soil is broken during the course of the production of the VA mycorrhizae (2 to 4 months) to cause clogging. Under the condition, oxygen to the soil could not be supplied sufficiently, which is unfavorable for propagation of VA mycorrhizae. In addition, the condition of oxygen deficiency involves a high risk of germ contamination with pathogenic microbes

In accordance with the method of JP-A 63-87973 where a porous ampho-ion exchanger is used as a carrier for propagation of VA mycorrhizae with host plants of potato, the host plants are limited to only potato and the like plants, the carrier of itself is an expensive one such as DEAE cellulose and is not suitable for practical use, and the spore density to be yielded is not sufficient.

The present inventors performed earnest and repeated studies so as to overcome the above-mentioned problems in the prior arts and, as a result, surprisingly have found that all the above-mentioned problems may be overcome by using, as a carrier, calcined amber loam or a mixture of calcined amber loam and calcined attapulgite. On the basis of their findings, they have completed the present invention.

### Disclosure of the Invention

First, the present invention provides a method of preparing a VA mycorrhizae inoculant characterized by cultivating plants as infected with VA mycorrhizae of the genus Gigaspora in a carrier of calcined amber loam so as to propagate the VA mycorrhizae.

Secondly, the present invention provides a method of preparing a VA mycorrhizae inoculant characterized by cultivating plants as infected with VA mycorrhizae of the genus Gigaspora in a carrier of a mixture comprising calcined amber loam and calcined attapulgite so as to propagate the VA mycorrhizae.

The first embodiment and the second embodiment of the present invention are different from each other in that the former uses calcined amber loam singly as a carrier while the latter uses a mixture comprising calcined amber loam and calcined attapulgite as a carrier.

### Best Mode to practice the Invention

VA mycorrhizae are a kind of Zygomycetes living in soil, and it is known that the mycelia of them infect into roots of various plants to form mycorrhizal organs therein so that the both live together symbiotically.

In the method of the present invention, selectively used are VA mycorrhizae of belonging to the genus Gigaspora, high-density propagation of which has heretofore been especially difficult, from among various kinds of VA mycorrhizae.

As VA mycorrhizae of the genus Gigaspora to be used in the present invention, there are mentioned, for example, Gigaspora albida, Gigaspora margarita, Gigaspora gigantea, Gigaspora calospora and Gigaspora heterogama.

These VA mycorrhizae of the genus Gigaspora for use in the present invention may be collected from the natural field by the use of a sieve or the like (T. Suzuki, Problems on VA Mycorrhizae 5, Agriculture and Horticulture, Vol. 62, No. 3, pp. 28 to 33, 1987) or by centrifugation (JP-A 63-309178). They may also be propagated by a nutrient film technique culture method (JP-A 55-118390) or by a method of using roots as cultivated by tissue culture (JP-B 62-49037). In addition, VA mycorrhizae as adhered to an inorganic or organic carrier may also be used.

Plants to be infected with VA mycorrhizae or host plants for propagation of VA mycorrhizae for use in the present invention are not specifically defined provided that they may be infected with VA mycorrhizae of the genus Gigaspora. Preferred are plants which may grow rapidly to have well grown roots and may easily be infected with VA mycorrhizae of the genus Gigaspora.

For instance, mentioned are true grasses of Gramineae such as corn, crabgrass, sorgo (sweet sorghum or sugar sorghum), wheat, barley, lawn grass, Sudan grass, babiana grass and Guinea grass; solanous plants of Solanaceae such as eggplant, tomato, pimento (Spanish paprika) and green pepper; leguminous plants of Leguminosae such as red clover, soy bean, tare, mung bean, peanut and alfalfa; and liliaceous plants of Liliaceae such as Welsh onion and common onion.

These plants may be caltivated in various manners. For instance, seeds are sowed in a field and cultivated there to plants or the seedlings from them are then transplanted in a different field and are further cultivated there; or plants are cultivated and propagated by vegetative propagation or by cutting or grafting or from bulbs.

For infecting the above-mentioned host plants with VA mycorrhizae of the genus Gigaspora, a carrier (medium) is used. The carrier (medium) is not specifically defined provided that the host plants may grow in it, and various kinds of organic or inorganic carriers (media) may be used. As usable inorganic carriers, mentioned are, for example, zeolite, foam clay (bray clay), talc, pearlite, vermiculite, (calcined) amber loam, pumice, limestone, soil, sand and coke. As a usable organic carrier, mentioned is, for example, peat moss. A mixed carrier comprising two or more of them may also be used.

From the viewpoint of preventing contamination of the carrier with indigenous microbes, the carrier is desired to be subjected to sterilization (including calcination) prior to its use. For instance, a sterilized soil or a calcined amber loan is preferably used.

The method of inoculating VA mycorrhizae of the genus Gigaspora to the host plants so as to infect the plants with the microbes will be mentioned below. The VA mycorrhizal microbes may be applied to the host plants before or after rooting of them. Especially preferably, the microbes are applied to the host plants during sowing of their seeds, or during pre-treatment of their grafts, or simultaneously with sowing or grafting, or during transplantation of their seedlings. For applying the VA mycorrhizal microbes to the host plants, preferably, the microbes may be blended with the above-mentioned carrier, or they may be applied to the roots of the host plants, or they may be introduced into the lower layer below the seeds or buds, or they may be added to the planting holes for transplantation of the host plants.

For infecting host plants with VA mycorrhizae in accordance with the present invention, in general, from 1 to 100,000 spores/plant body, preferably from 5 to 10,000 spores/plant body, of VA mycorrhizae of the genus Gigaspora may be inoculated on host plants.

The plants as inoculated with VA mycorrhizae are cultivated by an ordinary method, for example, at a temperature of falling within the range of from 5 to 60°C, preferably from 10 to 45°C, under the carrier condition of having a pH value of from 3 to 9.5, preferably from 4 to 7.5, whereby the roots of the plants are infected with the VA mycorrhizae.

Accordingly, infection of the host plants with VA mycorrhizae of the genus Gigaspora is attained.

In accordance with the method of the present invention, the plants thus infected with VA mycorrhizae are characteristically cultivated with a carrier of heat-treated amber loam or calcined amber loam, or with a carrier of a mixture of calcined amber loam and calcined (or heat-treated) attapulgite. Amber loam is a amber-colored soil in the shape of ball, and therefore it is called AKADAMADO in Japan.

Specifically, the host plants as infected with VA mycorrhizae are transplanted in a medium containing a carrier of calcined amber loam or preferably a mixture of calcined amber loam and calcined attapulgite so that the VA mycorrhizae are propagated in the medium while the VA mycorrhizae-infected plants are fully grown therein. As the case may be, the infection and cultivation may be effected in the carrier from the start.

The calcined amber loam to be used in the present invention is one as obtained by calcining amber loam at a temperature of from 200 to 1000 °C preferably from 250 to 850°C. The grain size of the calcined amber loam is not specifically defined and may be generally within the range of from 0.3 to 5 mm, preferably from 0.5 to 3 mm.

The calcined attapulgite to be used in the present invention is one as obtained by calcining attapulgite at a temperature of from 200 to 1000 °C, preferably from 350 to 650°C. The grain size of the calcined attapulgite is not specifically defined and may be generally within the range of from 0.3 to 5 mm, preferably from 0.5 to 3 mm.

Where a mixture comprising calcined amber loam and calcined attapulgite is used as the carrier of the invention, the proportion of the calcined amber loam may be from 5 to 95 % by volume, preferably from 40 to 80 % by volume.

The medium to be used in the present invention may contain, in addition to the carrier mentioned above, charcoal, pumice, foam clay and others. Where such additives are added to the medium, the content of the calcined amber loam or the total content of the calcined amber loam and calcined attapulgite must be 80 % by volume or more of the whole medium.

Since the method of the present invention uses such a particular carrier, VA mycorrhizae of the genus Gigaspora may actively propagate in the carrier and the mycelia of the thus propagated VA mycorrhizae well efficiently extend throughout the whole of the container as filled with the carrier.

A fertilizer and others are added to the VA mycorrhizae-infected plants so as to induce the VA mycorrhizal sporulation with maintaining the vegetative growth of the plants. While the plants grow further by the vegetative growth condition, the VA mycorrhizae begin to form the spores. Cultivation of the host plants may be effected under ordinary conditions. For instance, the temperature for the cultivation may be generally from 5 to 60°C.

A fertilizer may be added so as to actively grow the plants. The fertilizer may be an originally prepared one or may also be a commercial product. It may be either a solid fertilizer or a liquid fertilizer, the latter being easy for controlling fertilization to the plants.

The phosphorus concentration in the fertilizer to be applied to the plants is desired to be not so high, and it is preferably 300 ppm or less.

The vegetative growth of the VA mycorrhizae-infected plants is maintained in the manner as mentioned above, and in a suitable stage of the growth, the sporulation of the VA mycorrhizae of the genus Gigaspora as infected on the plants is induced.

In general, after the plants have well grown and VA mycorrhizae have well propagated in 2 to 7 months from the start of the cultivation, irrigation and nutrient supply to them is stopped and the thus grown plants are allowed to be left as they are for a while, whereupon VA mycorrhizae form spores.

After the spore density has come to be sufficiently high, the used calcined amber loam or the used mixture of calcined amber loam and calcined attapulgite is recovered to isolate the formed VA mycorrhizae inoculant (product), and this is optionally dried, if desired, to obtain a final inoculant product.

Accordingly, a VA mycorrhizae inoculant having a high spore density and a high activity can be obtained by the present invention. The drying of the inoculant may be effected at a temperature at which the formed spores and mycelia are not damaged, for example, at 70°C or lower, preferably at a temperature of from 20 to 50 °C.

The VA mycorrhizae inoculant as prepared in accordance with the method of the present invention may be inoculated onto vegetable or fruit seedlings during the growth of them or onto ornamental plants during the cultivation of them, whereby the seedlings or plants may be infected with the VA mycorrhizae so as to attain the favorable growth of them.

In accordance with the method of the present invention, a sufficient amount of spores of VA mycorrhizae may be recovered and the VA mycorrhizae-infected plants may be transplanted into a different fresh carrier comprising calcined amber loam or a mixture of calcined amber loam and calcined attapulgite whereby the sporulation of VA mycorrhizae may be induced again. In addition, the cultivation system of the present invention is free from contamination with any undesirable indigenous VA mycorrhizae and pathogenic microbes.

Specifically, in accordance with the method of the present invention, a fertilizer and others may be applied to the VA mycorrhizae-infected plants as transplanted onto a fresh carrier comprising calcined amber loam or a mixture of calcined amber loam and calcined attapulgite in the same manner as mentioned above so as to induce the sporulation of the microbes with maintaining the vegetative growth of the plants; and after the density of the spores formed has come to be sufficiently high, the carrier is recovered to isolate the formed VA mycorrhizal spores and the carrier are dried to form a VA mycorrhizae inoculant product while the VA mycorrhizae-infected plants are separated from the carrier and are again transplanted onto a different fresh carrier. In this manner, a sufficient amount of VA mycorrhizal spores may be obtained repeatedly several times from one VA mycorrhizae-infected seedling.

The present invention will be explained in more detail by way of the following examples.

### Examples 1 and 2 and Comparative Examples 1 and 2:

A 150 ml-volume vinyl resin pot was filled with a carrier of calcined amber loam obtained by calcining amber loam belonging to Kanto Loam (it is called AKADAMADO in Japan) as calcined at 800°C (grain size, 0.5 to 4 mm) in a depth of 2/3 of the capacity of the pot. 50 spores of VA mycorrhizae (Gigaspora margarita - its deposition was denied by Fermentation Research Institute of Japan. Applicant has a mind to furnish a sample of Gigaspora margarita to any interested party in response to request for the furnishing of the sample.) as collected from the soil of a farm field with no crops being cultivated therein were inoculated on the carrier; and the same calcined amber loam as above was placed thereover in a thickness of 1 cm. Above the calcined amber loam 3 seeds of alfalfa were sowed and were covered with a soil.

12 pots in all as set in this way were prepared, and the content of each pot was well wetted. The plants in the pots were then cultivated in a glass green house of from 25 to 30°C for 4 weeks so that the grown plants were infected with the VA mycorrhizae. Each of them was transfered into each plastic planter of No. 5 (1.5 liter volume). The first three plastic planters were filled with a carrier of 800°C-calcined amber loam having a grain size of from 0.5 to 4 mm (Example 1). And the second three plastic planters were filled with a carrier of a 1/1 (by volume) mixture of 600 °C-calcined attapulgite and 800 °C-calcined amber loam having a grain size of from 0.5 to 4 mm (Example 2). The third three plastic planters were filled with a commercial non-calcined amber loam having a grain size of from 0.5 to 4 mm (Comparative Example 1), and the residual three plastic planters were filled with vermiculite having a grain size of from 1 to 4 mm (Comparative Example 2). The carriers each contained 5 g/liter of a chemical fertilizer (8-8-8).

After the transplantation, the plants were cultivated in a glass green house of from 25 to 35 °C for 14 weeks while the VA mycorrhizae Gigaspora margarita were propagated therewith, and thereafter irrigation to the plants was stopped. Then, the plants were left as they were for 2 weeks. The obtained VA mycorrhizae inoculants thus were recovered and the number of the spores of the VA mycorrhizae Gigaspora margarita as adhered to the carriers was counted. Table 1 below shows an average value of the counted numbers of the spores for the respective groups each three pots. In the non-calcined amber loam group (Comparative Example 1), spores of other VA mycorrhizae, which were considered to be those of the genus Glomus, were observed to grow with the plants.

**Table 1**

| | Example 1 | Example 2 | Comparative Example 1 | Comparative Example 2 |
|---|---|---|---|---|
| | Calcined Amber loam | Mixture of Calcined Attapulgite and Calcined Amber loam | Non-calcined Amber loam | Vermiculite |
| Number of Spores (/pot) | 9,769 | 12,133 | 7,229 | 1,281 |

### Examples 3 and 4, and Comparative Examples 3 and 4:

The same process as in Examples 1 and 2 and Comparative Examples 1 and 2 was carried out, except that white clover plants were used in place of the alfalfa plants as used in Examples 1 and 2 and Comparative Examples 1 and 2 and that a carrier of only calcined amber loam was put in the No. 5 plastic planter (Example 3), a carrier of a 1/2 mixture (by volume) of calcined attapulgite and calcined amber loam in the same (Example 4), a carrier of only non-calcined amber loam (Comparative Example 3), and a carrier of andosoils as autoclaved for sterilization at 120 °C for one hour in the same (Comparative Example 4). Table 2 below shows an average value of the numbers of the spores as counted for the respective groups each the three pots. In the non-calcined amber loam group (Comparative Example 3), spores of other VA mycorrhizae, which were considered to be those of the genous Glomus, were observed to grow with the plants.

**Table 2**

| | Example 3 | Example 4 | Comparative Example 3 | Comparative Example 4 |
|---|---|---|---|---|
| | Calcined Amber loam | Mixture of Calcined Attapulgite and Calcined Amber loam | Non-calcined Amber loam | Andosoils |
| Number of Spores (/pot) | 8,076 | 12,803 | 4,226 | 1,551 |

### Examples 5 and 6, and Comparative Example 5 :

The same process as in Examples 1 and 2 and Comparative Example 1 was carried out, except that Gigaspora albida was used in place of Gigaspora margarita as used in Examples 1 and 2 and Comparative Example 1. Applicant has a mind to furnish a sample of Gigaspora albida to any interested party in response to request for the furnishing of the sample. Table 3 below shows an average value of the numbers of the spores as counted for the respective groups each the three pots.

**Table 3**

| | Example 5 | Example 6 | Comparative Example 5 |
|---|---|---|---|
| | Calcined Amber loam | Mixture of Calcined Attapulgite and Calcined Amber loan | Non-calcined Amber loam |
| Number of Spores (/pot) | 9,218 | 11,004 | 6,059 |

In accordance with the method of the present invention as explained in detail hereinabove, where a carrier of calcined amber loam or preferably a mixture comprising calcined amber loam and calcined attapulgite is used for cultivating plants as infected with VA mycorrhizae of the genus Gigaspora to prepare VA mycorrhizae inoculants contamination of the inoculants with indigenous VA mycorrhizae and pathogenic microbes may be prevented so that the pure seed microbes of VA mycorrhizae of the genus Gigaspora may be propagated.

In addition, in accordance with the method of the present invention, efficient propagation of VA mycorrhizae of the genus Gigaspora, the propagation of which has heretofore been difficult from among VA mycorrhizae, is possible.

Moreover, in accordance with the method of the present invention, a VA mycorrhizae inoculant (preparation) which may easily be handled, which has a high spore density and which has a stabilized activity may be obtained at low cost.

Further, since the carrier with propagated VA mycorrhizae to be obtained by the method of the present invention may directly be sold as a commercial product, the operation of the method is simple without needing any labor for separation of the spores from the carrier.

### Possibility of Industrial Utilization

In accordance with the method of the present invention, efficient propagation of VA mycorrhizae of the genus Gigaspora, the propagation of which has heretofore been difficult from among VA mycorrhizae, is possible.

Accordingly, the present invention is extremely useful in the field of agriculture and horticulture.

## Claims

1. A method of preparing a VA mycorrhizae inoculant characterized by cultivating plants as infected with VA mycorrhizae of the genus Gigaspora in a carrier of calcined amber loam so as to propagate the VA mycorrhizae.

2. A method of preparing a VA mycorrhizae inoculant characterized by cultivating plants as infected with VA mycorrhizae of the genus Gigaspora in a carrier of a mixture comprising calcined amber loam and calcined attapulgite so as to propagate the VA mycorrhizae,
